# FASCICULE DE BREVET EUROPEEN

(11) **EP 3 521 691 B1**
(45) Date de publication et mention de la délivrance du brevet: **26.07.2023**
(21) Numéro de dépôt: 19154317.2
(22) Date de dépôt: 29.01.2019
(51) Int. Cl.: F21S 41/143, F21S 41/153, F21S 41/24, F21S 41/663, F21S 41/20, F21S 41/255, F21S 41/26

(54) **MODULE LUMINEUX POUR VÉHICULE AUTOMOBILE, ET DISPOSITIF D'ÉCLAIRAGE ET/OU DE SIGNALISATION MUNI D'UN TEL MODULE**
LEUCHTMODUL FÜR KRAFTFAHRZEUG, UND BELEUCHTUNGS- UND/ODER SIGNALISIERUNGSVORRICHTUNG, DIE MIT EINEM SOLCHEN MODUL AUSGESTATTET IST
LIGHT MODULE FOR A MOTOR VEHICLE, AND LIGHTING AND/OR SIGNALLING DEVICE COMPRISING SUCH A MODULE

(30) Priorité: 31.01.2018 FR 1850800
(43) Date de publication de la demande: 07.08.2019
(73) Titulaire: Valeo Vision, 93012 Bobigny Cedex (FR)
(72) Inventeur: GROMFELD, Yves, 49000 ANGERS (FR)
(74) Mandataire: Valeo Visibility

(56) Documents cités:
- EP-A1- 2 857 740
- EP-A1- 3 128 226
- WO-A1-2016/005409
- AT-A4- 518 552
- AT-B1- 518 552
- CN-A- 107 131 462
- CN-A- 107 525 005
- CN-U- 206 592 963
- DE-A1-102005 021 079

## Description

La présente invention est relative notamment à un module lumineux pour véhicule automobile, et à un dispositif d'éclairage et/ou de signalisation muni d'un tel module.

Une application préférée concerne l'industrie automobile, pour l'équipement de véhicules, en particulier pour la réalisation de dispositifs susceptibles d'émettre des faisceaux lumineux, encore appelés fonctions d'éclairage et/ou de signalisation, répondant en général à des réglementations. Par exemple, l'invention peut permettre la production d'un faisceau lumineux de type segmenté, notamment pour une signalisation et/ou la participation à des fonctions d'éclairage à l'avant d'un véhicule. Elle peut servir à la production d'un faisceau de champ proche. On appelle faisceau segmenté un faisceau dont la projection forme une marque composée de segments de faisceau, chaque segment pouvant être allumé de manière indépendante.

Les feux de signalisation et/ou d'éclairage de véhicules automobiles, sont des dispositifs lumineux qui comprennent une ou plusieurs sources de lumière et une glace qui ferme le feu. De façon simplifiée, la source lumineuse émet des rayons lumineux pour former un faisceau lumineux qui est dirigé vers la glace afin de produire une plage éclairante qui transmet la lumière à l'extérieur du véhicule. Ces fonctions doivent répondre à des réglementations en matière d'intensité lumineuse et d'angles de visibilité notamment. Les modules d'éclairage et de signalisation connus sont jusqu'à présent prévus pour émettre par exemple :
- un faisceau de croisement, dirigé vers le bas, encore parfois appelé faisceau de code et utilisé en cas de présence d'autres véhicules sur la chaussée ;
- un faisceau de route dépourvu de coupure, et caractérisé par un éclairement maximal dans l'axe du véhicule ;
- un faisceau d'éclairage pour temps de brouillard, caractérisé par une coupure plate et une grande largeur d'éclairement ;
- un faisceau de signalisation pour la circulation en ville, encore appelé lampe de ville.

Récemment, on a développé des technologies permettant de produire un faisceau pixélisé pour réaliser des fonctions d'éclairage. On connaît notamment des publications de brevet EP 2306075 A2 et EP 3128226 A1 des dispositifs d'éclairage comportant une pluralité de sources lumineuses constituées par des diodes électroluminescentes émettant chacune en direction d'un élément optique sous forme de guide d'ondes dont un dioptre de sortie projette un faisceau individuel à l'avant du véhicule. On forme ainsi une pluralité d'unités d'illumination qui peuvent être commandées de sorte à produire les formes de faisceau souhaitées.

Cependant, pour certains faisceaux, et particulièrement pour les feux de croisement, on cherche une répartition lumineuse spécifique que les modules lumineux utilisés existants ne parviennent pas à atteindre.

La présente invention vise à remédier au moins en partie aux inconvénients de techniques actuelles.

La présente invention concerne, suivant un aspect, un module lumineux pour véhicule automobile selon la revendication 1. Le module lumineux est configuré pour produire un faisceau de sortie, comprenant au moins une première rangée de premières unités d'illumination configurée pour produire un premier faisceau de sortie, chaque première unité d'illumination comprenant une première source lumineuse et un premier élément optique configuré pour produire un premier faisceau unitaire à partir de rayons lumineux issus de la première source lumineuse, caractérisé en ce que le premier élément optique de chacune des premières unités d'illumination est configuré pour produire :
- une première réflexion totale interne des rayons issus de la première source lumineuse de sorte à former un faisceau réfléchi de rayons collimatés ;
- une deuxième réflexion totale interne des rayons collimatés de sorte à générer le premier faisceau unitaire.

Selon un autre aspect, la présente invention concerne également un dispositif d'éclairage et/ou de signalisation de véhicule automobile équipé d'au moins un module lumineux indiqué précédemment, et de préférence d'au moins deux modules.

Avantageusement, le premier faisceau de sortie peut être un complément efficace à un autre faisceau, voire plusieurs.

La présente invention concerne également un véhicule équipé d'au moins un module et/ou un dispositif selon la présente invention. En particulier, on peut utiliser deux dispositifs espacés latéralement à l'avant du véhicule.

Selon l'invention, le premier élément optique comprend un guide d'ondes configuré pour produire la première réflexion interne et la deuxième réflexion interne. Le guide est avantageusement suivi par une lentille formant la sortie de l'élément optique.

De cette façon, le traitement optique à double réflexion totale interne est réalisé dans un seul élément optique.

Selon l'invention, le guide comprend une première surface de réflexion recevant les rayons issus de la première source lumineuse depuis un dioptre d'entrée du guide et produisant la première réflexion totale interne en direction d'une deuxième surface de réflexion recevant les rayons collimatés et produisant la deuxième réflexion totale interne pour générer le premier faisceau unitaire.

Optionnellement, la première surface et la deuxième surface sont décalées suivant une direction en hauteur du module.

Sans impacter l'encombrement latéral du module, cette disposition procure un trajet des rayons lumineux dans le guide suffisamment long pour subir les deux réflexions.

Préférentiellement, la première surface est située au-dessus de la deuxième surface suivant la direction en hauteur du module.

Suivant un cas non limitatif, la deuxième surface de réflexion est une surface continue. Elle présente de préférence une courbure avec un rayon constant.

Selon un mode de réalisation non limitatif, les premiers éléments optiques forment un ensemble issu d'une pièce monobloc venue d'une seule matière.

Avantageusement, la surface continue est commune aux guides de chacune des premières unités d'illumination
Préférentiellement, cette surface peut correspondre à une tranche de guide qui s'étend latéralement de manière commune à toutes les unités d'illumination.

Selon l'invention, la deuxième réflexion interne est configurée pour étaler le premier faisceau unitaire suivant une direction latérale, perpendiculaire à une direction en hauteur du module.

De cette façon, on limite l'effet de discrétisation des faisceaux unitaires ayant tendance à isoler les faisceaux unitaires projetés les uns des autres de sorte que des zones de transition moins éclairées sont visibles. Au contraire, l'invention produit un chevauchement suffisant des faisceaux unitaires suivant la direction latérale de sorte à ce que la transition entre eux soit adoucie.

Selon l'invention, la deuxième réflexion interne est configurée pour générer une décroissance de luminosité vers le bas du premier faisceau unitaire.

Cette disposition est particulièrement avantageuse dans le cas où le faisceau de sortie participe à une fonction de feu de croisement, en formant un faisceau de champ proche. Comme expliqué en détail plus loin, dans une telle situation, on cherche à réduire l'illumination au plus proche du véhicule et à l'accroître vers la zone de coupure. Alors qu'une telle variation d'intensité lumineuse est actuellement impossible en utilisant des faisceaux segmentés, la présente invention offre un traitement optique en deux phases de réflexion qui permet cette variation d'intensité d'illumination suivant la hauteur d'un faisceau.

Selon l'invention, le premier faisceau de sortie est un faisceau de champ proche d'un feu de croisement.

Selon l'invention, le module comprend une deuxième rangée de deuxièmes unités d'illumination configurée pour produire un deuxième faisceau de sortie, chaque deuxième unité d'illumination comprenant une deuxième source lumineuse et un deuxième élément optique configuré pour produire un deuxième faisceau unitaire à partir de rayons lumineux issus de la deuxième source lumineuse.

On peut ainsi, au sein du même module, produire ou participer à produire une autre fonction d'éclairage ou produire ou participer à produire un faisceau complémentaire au premier faisceau de sortie généré par les premières unités d'illumination.

Préférentiellement, la largeur des premiers faisceaux unitaires est égale au double de la largeur des deuxièmes faisceaux unitaires.

Avec cette disposition, on réduit le nombre de sources lumineuses à utiliser pour le premier faisceau de sortie et en préserve une résolution supérieure pour le deuxième faisceau.

Selon l'invention, le deuxième faisceau de sortie est un faisceau de coupure du feu de croisement.

Ce contexte correspond avantageusement au cas évoqué précédemment dans lequel le premier faisceau de sortie est un faisceau de champ proche destiné à être projeté majoritairement ou en totalité en-dessous d'une ligne de coupure et dans lequel le deuxième faisceau de sortie et un faisceau de coupure complémentaire de sorte que la résultante des deux faisceaux forme une fonction de feu de croisement.

Eventuellement le module comprend aussi au moins une troisième rangée de troisièmes unités d'illumination configurée pour produire un troisième faisceau de sortie, chaque troisième unité d'illumination comprenant une troisième source lumineuse et un troisième élément optique configuré pour produire un troisième faisceau unitaire à partir de rayons lumineux issus de la troisième source lumineuse. De préférence, le troisième faisceau de sortie est un faisceau de complément route. Ce troisième faisceau peut être projeté simultanément au premier faisceau de sortie, et possiblement au deuxième faisceau de sortie, de sorte à produire une illumination plus étendue en hauteur selon la fonction de feu de route. Le premier faisceau de sortie peut servir à éclairer la partie proche de la route relativement aux véhicules alors que le troisième faisceau de sortie éclaire la partie située au-dessus de la ligne de coupure. Le deuxième faisceau peut compléter l'illumination. L'invention peut présenter plusieurs troisièmes rangées de troisièmes unités d'illumination configurées chacune pour produire un troisième faisceau de sortie ; l'ajout de rangées permet d'augmenter la hauteur d'illumination résultant des troisièmes faisceaux.

Selon l'invention, le module comprend une unité de commande agencée pour activer et/ou désactiver et/ou modifier l'intensité lumineuse de chacune des premières sources lumineuses et le cas échéant des deuxièmes sources lumineuses et/ou des troisièmes sources lumineuses.

Dans un mode de réalisation préféré, le module est configuré pour projeter un faisceau lumineux à l'avant d'un véhicule automobile.

D'autres caractéristiques et avantages de la présente invention seront mieux compris à l'aide de la description exemplaire et des dessins parmi lesquels :
- la figure 1 montre une première vue en perspective d'une paire de module selon un mode de réalisation de l'invention ;
- la figure 2 présente une autre vue en perspective du mode de réalisation de l'invention de la figure 1 ;
- la figure 3 montre une face avant d'un module lumineux selon l'invention et la figure 4 en illustre la face arrière ;
- la figure 5 présente une possibilité de répartition de sources lumineuses dans un module ;
- la figure 6 schématise des possibilités de projection de faisceaux unitaires produits par des unités d'illumination présentes, dans cet exemple, dans deux modules lumineux utilisés en conjonction ;
- la figure 7 révèle une coupe schématique d'une partie optique d'un module lumineux avec le trajet de certains rayons.

Sauf indication spécifique du contraire, des caractéristiques techniques décrites en détail pour un mode de réalisation donné peuvent être combinées à des caractéristiques techniques décrites dans le contexte d'autres modes de réalisation décrits à titre exemplaire et non limitatif.

Dans les caractéristiques exposées ci-après, les termes relatifs à la verticalité, l'horizontalité et à la transversalité (ou encore direction latérale), ou leurs équivalents, s'entendent par rapport à la position dans laquelle le module d'éclairage est destiné à être monté dans un véhicule. Les termes « vertical » et « horizontal » sont utilisés dans la présente description pour désigner des directions, suivant une orientation perpendiculaire au plan de l'horizon pour le terme « vertical » (qui correspond à la hauteur des modules), et suivant une orientation parallèle au plan de l'horizon pour le terme « horizontal ». Elles sont à considérer dans les conditions de fonctionnement du dispositif dans un véhicule. L'emploi de ces mots ne signifie pas que de légères variations autour des directions verticale et horizontale soient exclues de l'invention. Par exemple, une inclinaison relativement à ces directions de l'ordre de + ou - 10° est ici considérée comme une variation mineure autour des deux directions privilégiées.

Le module de l'invention incorpore pour le moins une rangée d'unités d'illumination permettant de générer un faisceau de type segmenté, mais assure aussi la projection d'au moins un autre faisceau, par l'intermédiaire d'au moins une autre rangée d'unités d'illumination. Le module de l'invention peut donc être complexe et associer plusieurs types d'unités d'illumination qui peuvent en outre éventuellement partager des composants.

Dans le cadre de l'invention, on entend par faisceau de croisement, un faisceau employé lors de la présence de véhicules croisés et/ou suivis et/ou d'autres éléments (individus, obstacles...) sur la chaussée ou à proximité. Ce faisceau présente une direction moyenne descendante. Il peut être éventuellement caractérisé par une absence de lumière au-dessus d'un plan incliné de 1% vers le bas du côté de la circulation dans l'autre sens, et d'un autre plan incliné de 15 degrés vers le haut par rapport au précédent du côté de la circulation dans le même sens, ces deux plans définissant une coupure conforme à la réglementation européenne. Cette coupure supérieure descendante a pour but d'éviter d'éblouir les autres usagers présents dans la scène de route s'étendant devant le véhicule ou sur les bas-côtés de la route. Le faisceau de croisement, autrefois issu d'un projecteur simple, a connu des évolutions, la fonction de croisement pouvant être couplée avec d'autres caractéristiques d'éclairage qui sont encore considérés comme des fonctions de feu de croisement au sens de la présente invention.

Cela comprend notamment les fonctions suivantes :
- faisceau AFS (abréviation pour « Advanced Frontlighting System » en anglais), qui propose notamment d'autres types de faisceaux. Il s'agit notamment de la fonction dite BL (Bending Light en anglais pour éclairage de virage), qui peut se décomposer en une fonction dite DBL (Dynamic Bending Light en anglais pour éclairage mobile de virage) et une fonction dite FBL (Fixed Bending Light en anglais pour éclairage fixe de virage) ;
- faisceau dit Town Light en anglais, pour éclairage de ville. Cette fonction assure l'élargissement d'un faisceau de type feu de croisement tout en diminuant légèrement sa portée ;
- faisceau dit Motorway Light en anglais, pour éclairage d'autoroute, réalise quant à elle la fonction autoroute. Cette fonction assure une augmentation de la portée d'un feu de croisement en concentrant le flux lumineux du feu de croisement au niveau de l'axe optique du dispositif projecteur considéré ;
- faisceau dit Overhead Light en anglais, pour feu de portique. Cette fonction assure une modification d'un faisceau de feu de croisement typique de telle sorte que des portiques de signalisation situés au-dessus de la route soient éclairés de façon satisfaisante au moyen des feux de croisement ;
- faisceau dit AWL (Adverse Weather Light en anglais, pour feu de mauvais temps).

Le feu de croisement comporte une zone d'éclairage différenciée dont l'objectif est de ne pas éblouir les conducteurs de véhicules croisés. En particulier, le feu de croisement comporte une zone éclairée en dessous de la ligne de coupure, substantiellement au niveau de hauteur de la ligne d'horizon 36, cette zone s'étendant latéralement de part et d'autre du véhicule en couvrant un secteur angulaire large. Cette zone correspond à un champ proche du véhicule. Il est cependant souhaitable que le feu de croisement éclaire aussi plus en avant du véhicule, c'est-à-dire au-dessus de la ligne d'horizon 36, pour offrir une meilleure visibilité au conducteur. De ce fait, pour satisfaire en même temps à l'objectif de non-éblouissement, la zone d'éclairage au-dessus de la ligne d'horizon 36 est limitée latéralement pour limiter la gêne pour les véhicules croisés. Dans le contexte de l'invention, le premier faisceau de sortie 33 peut servir à réaliser le faisceau de champ proche alors qu'un deuxième faisceau de sortie 34 peut être généré en complément pour former le faisceau de coupure. Ainsi, dans ce cas, le premier faisceau de sortie 33 est essentiellement projeté en-deçà de la ligne d'horizon 36 alors que le faisceau de coupure le complète dans une portion latéralement limitée s'étendant au-dessus de la ligne d'horizon 36.

Éventuellement, l'invention peut aussi servir à produire un faisceau de route. Le faisceau de route de base a pour fonction d'éclairer sur une large étendue la scène face au véhicule, mais également sur une distance conséquente, typiquement environ deux cents mètres. Ce faisceau lumineux, de par sa fonction d'éclairage, se situe principalement au-dessus de la ligne d'horizon. Il peut présenter un axe optique d'éclairement légèrement ascendant par exemple.

Le dispositif peut aussi servir à former d'autres fonctions d'éclairage via ou en-dehors de celles décrites précédemment.

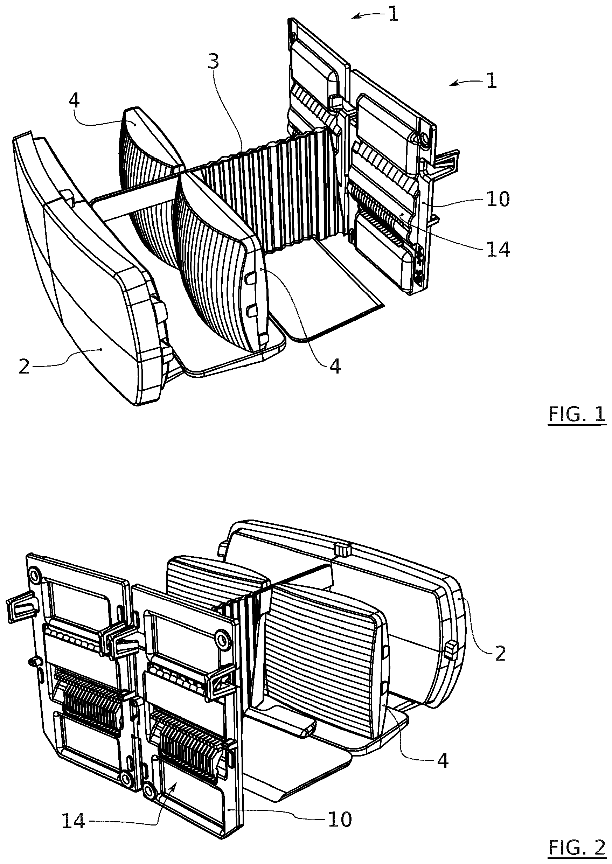

La figure 1 montre un mode de réalisation de l'invention comportant deux modules lumineux 1. Bien que cela ne soit pas limitatif, les modules 1 peuvent être identiques et espacés latéralement les uns des autres, notamment par l'intermédiaire d'une paroi de séparation 3 qui s'étend vers l'avant des modules 1. L'invention comprend potentiellement une pluralité de modules permettant chacun d'émettre au moins un type de faisceaux unitaires. Ils sont de préférence juxtaposés, c'est-à-dire arrangés suivant une direction d'alignement horizontale. Le terme module ne signifie pas que les modules sont des organes forcément totalement distincts ; ils s'entendent simplement comme des organes de formation de faisceaux distincts ; ils peuvent partager des parties communes, comme un support, une optique de projection ou des éléments électroniques, de commande par exemple. Outre des modules lumineux 1, le dispositif de l'invention peut intégrer des modules d'autres types pour la réalisation d'autres fonctions.

Chaque module lumineux 1 comprend, dans le cas représenté, un support 10 portant un bloc optique 14 et une carte à circuit imprimé comprenant des moyens de commande en allumage de source lumineuse qui peuvent être portées par la carte elle-même. Les sources lumineuses sont chacune positionnées de sorte à générer un flux lumineux entrant dans le bloc optique 14 dont il résulte une projection de lumière, ici en direction d'un élément optique de champ 4 (qui peut être une lentille biconvexe) puis d'un élément optique de projection 2 (également préférentiellement une lentille). Ce dernier est préférentiellement commun aux différents modules 1.

De façon connue en soi, on utilise avantageusement des sources lumineuses. D'une manière générale, la présente invention peut utiliser des sources lumineuses du type diodes électroluminescentes encore communément appelées LEDs. Il peut éventuellement s'agir de LED(s) organique(s). Notamment, ces LEDs peuvent être dotées d'au moins une puce utilisant la technologie des semi-conducteurs et apte à émettre une lumière d'intensité avantageusement ajustable selon la fonction d'éclairage et/ou de signalisation à réaliser. Par ailleurs, le terme source lumineuse s'entend ici d'un ensemble d'au moins une source élémentaire telle une LED apte à produire un flux conduisant à générer en sortie du module de l'invention au moins un faisceau lumineux. Dans un mode avantageux, la face de sortie de la source est de section rectangulaire, ce qui est typique pour des puces à LEDs.

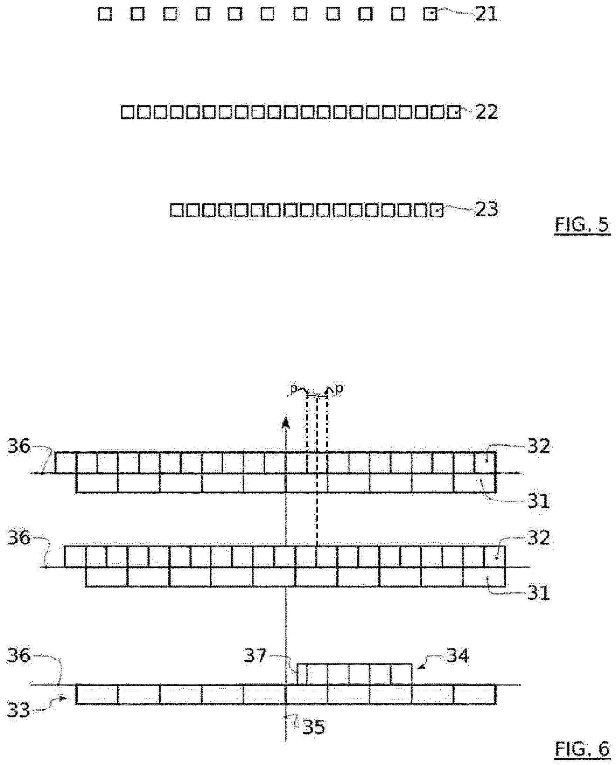

De préférence, comme le montre la figure 5, les sources lumineuses sont organisées en rangées. En particulier, on a représenté une première rangée de premières sources lumineuses 21 servant chacune à produire un premier faisceau unitaire 31 en conjonction avec un premier élément optique 11, l'ensemble formant une première unité d'illumination. Apparaît également une deuxième rangée de deuxièmes sources lumineuses 22 servant chacune à produire un deuxième faisceau unitaire 32 en conjonction avec un deuxième élément optique 12, l'ensemble formant une deuxième unité d'illumination. Enfin, une troisième rangée de troisièmes sources lumineuses 23 est associée à des troisièmes éléments optiques 13 pour produire des troisièmes faisceaux unitaires 38, l'ensemble formant des troisièmes unités d'illumination.

Chaque module lumineux 1 comprend une unité de commande agencée pour activer et/ou désactiver et/ou modifier l'intensité lumineuse de chacune des premières sources lumineuses 21, des deuxièmes sources lumineuses 22 et des troisièmes sources lumineuses 23.

Dans un cas préférentiel correspondant aux illustrations, les éléments optiques 11, 12, 13 présentent des guides d'ondes et des lentilles et de préférence des microlentilles. Les guides d'ondes assurent une phase de propagation de lumière dans l'élément optique depuis une face d'entrée et en produisant des réflexions internes. Les lentilles reçoivent la lumière ainsi propagée pour la projeter vers l'avant de l'élément optique. De préférence, un guide et une lentille forment un couple en une seule pièce dont ils constituent chacun une portion. Les éléments 12 et 13 sont des lentilles et de préférence des microlentilles.

Chaque microlentille présente avantageusement une face de sortie dont les dimensions sont supérieures ou égales à une fois la dimension de la diode et inférieures ou égales à cinq fois les dimensions de la diode à laquelle elle est associée. Elles sont en général dans un ordre de grandeur millimétrique. Ainsi par exemple, pour une diode électroluminescente (LED) individuelle dont la surface émettrice est de 1 mm de côté, les dimensions de la face de sortie de la microlentille associée seront inscrites dans un carré de 5 mm de côté maximum. En outre, ces éléments peuvent être formés à partir d'un seul bloc optique 14 dont une face avant apparaît à la figure 1 et une face arrière apparaît à la figure 2. Il peut s'agir d'une pièce venue d'une seule matière optique, par exemple du poly-méthacrylate de méthyle. Les éléments optiques d'une rangée considérée sont de préférence juxtaposés bord à bord suivant la direction en largeur du faisceau à produire

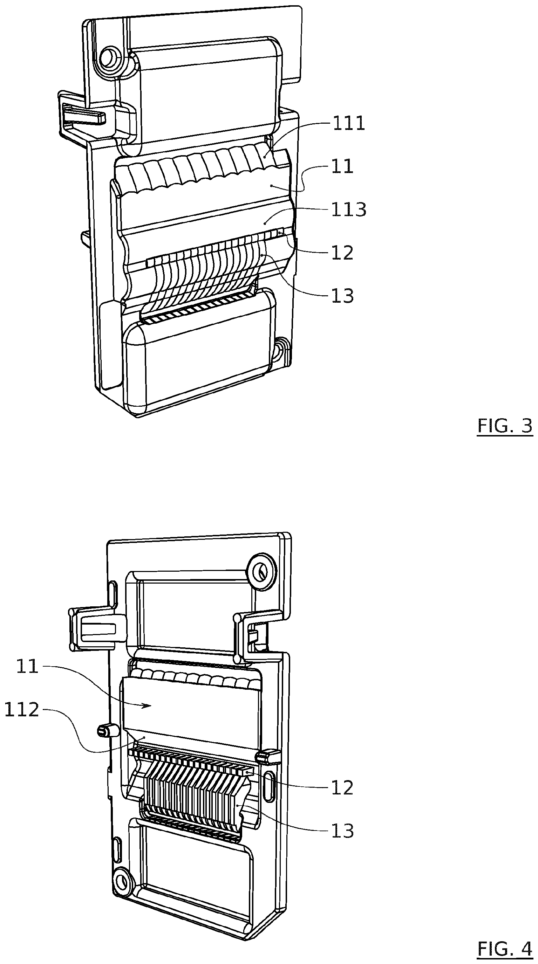

Les figures 3 et 4 montrent plus précisément un exemple de réalisation des éléments optiques 11, 12, 13. Dans ce contexte, les premiers éléments optiques 11 ont des guides et des lentilles juxtaposées de sorte à former une rangée. L'orientation de cette rangée est préférentiellement dirigée perpendiculairement à l'axe optique et de préférence parallèlement à la ligne d'horizon. Ils comportent chacun, au niveau du guide, une première surface de réflexion 111 ici sous forme d'une surface de l'enveloppe de la lentille qui présente un profil curviligne convexe. La figure 4 présente, par la face arrière du bloc optique 14, la partie amont des premiers éléments optiques 11, avec notamment une deuxième surface de réflexion 112. Cette dernière est ici une surface continue, en forme de biseau s'étendant dans la direction latérale, également avantageusement horizontalement. On note aussi un dioptre de sortie 113, au niveau de la lentille de l'élément optique, par lequel les rayons lumineux sortent du premier élément optique 11.

Une deuxième rangée d'éléments optiques 12 est aussi visible, par la face aval du bloc optique 14 en figure 3, permettant de visualiser la face de sortie des rayons de l'élément optique 12 et, en figure 4, par la face amont du bloc optique 14, faisant apparaître la face d'entrée des rayons de l'élément optique 12.

De manière équivalente, les éléments optiques 13 sont organisés en rangées comme précédemment.

On notera des figures 3 à 5 qu'il n'est pas nécessaire que le nombre d'unités d'illumination soit identique entre les premières, deuxièmes et troisièmes unités. Par ailleurs, il apparaît dans ce mode de réalisation que la dimension en largeur des premières unités d'illumination est supérieure à celle des deuxièmes unités d'illumination, et potentiellement à celle des troisièmes unités d'illumination. Dans l'exemple, la largeur des premières unités d'illumination est le double de celle des autres unités. Cela se traduit par une largeur plus importante des premiers éléments optiques 11 et par un espacement plus important entre les premières sources 21. En effet, la résolution du premier faisceau de sortie généré par l'association des premières unités d'illumination ne nécessite usuellement pas une résolution aussi élevée que celle du deuxième faisceau de sortie, dans le contexte d'une application à la formation d'un faisceau de champ proche par le premier faisceau de sortie et à la formation d'un faisceau de coupures par le deuxième faisceau de sortie.

De préférence, les différentes rangées d'unités d'illumination sont superposées.

On a représenté en figure 6 des exemples de projection de faisceaux unitaires permettant de réaliser des faisceaux de sortie lorsqu'ils sont combinés. On notera que l'image des sources lumineuses est inversée dans cet exemple de réalisation des modules, les premiers faisceaux unitaires 31, par exemple, étant projetés vers le bas alors que la première rangée de sources 21 est positionnée vers le haut du module.

Dans la partie supérieure de la figure 6, on a représenté une projection de l'ensemble des premiers faisceaux unitaires 31 et des deuxièmes faisceaux unitaires 32 réalisable avec un premier module 1. On notera la largeur des premiers faisceaux unitaires 31 égale au double de celle des deuxièmes faisceaux 32. On notera aussi la position des premiers faisceaux unitaires 31, en dessous de la ligne d'horizon 36. Bien évidemment, un léger chevauchement est possible, notamment pour assurer une transition douce avec les deuxièmes faisceaux unitaires 32. Ces derniers sont au moins majoritairement situés au-dessus de la ligne d'horizon 36. Les faisceaux unitaires 31, 32 sont organisées autour d'un axe médian vertical 35.

La partie intermédiaire de la figure 6 montre une projection de l'ensemble des premiers faisceaux unitaires 31 et des deuxièmes faisceaux unitaires 32 réalisables avec un deuxième module 1. La ligne d'horizon 36 et l'axe médian 35 y sont aussi présentés de sorte à visualiser la position relative des faisceaux produits par ce deuxième module 1 relativement à ceux produits par le premier module 1. En particulier, on note un décalage latéral des faisceaux produits par les deux modules 1. En ce qui concerne les deuxièmes faisceaux 32, cela permet de disposer d'un pas de définition d'un bord latéral de coupure 37 plus petit (potentiellement divisé par deux). La figure 6 expose ce principe de réduction du pas par les dimensions « p » correspondant au pas de décalage des deuxièmes faisceaux. Pour les premiers faisceaux 31, ce décalage permet un chevauchement des premiers faisceaux 31 adoucissant les transitions entre les faisceaux unitaires émis par les deux modules. Avantageusement, il n'y a pas de décalage vertical entre les faisceaux émis par les deux modules 1. Ces derniers permettent donc lorsqu'ils sont commandés de manière équivalente d'augmenter l'intensité lumineuse globale.

La partie inférieure de la figure 6 est un exemple de faisceaux de sortie résultant de la commande de deux modules 1. Dans ce cas, l'ensemble des premiers faisceaux unitaires 31 est émis, par allumage de l'intégralité des sources 21, de sorte à produire le premier faisceau de sortie 33, qui est dans l'exemple un faisceau de champ proche. Une partie des deuxièmes faisceaux unitaires 32 est par ailleurs active, par allumage d'une sélection de sources 22, de sorte à produire le deuxième faisceau de sortie 34. On comprend de la figure 6 que la sélection des sources 22 correspond à une pluralité de premières sources juxtaposées ; en évitant l'allumage de l'intégralité des deuxièmes sources 22, on cantonne l'illumination au-dessus de la ligne d'horizon 36 d'un secteur souhaité, évitant d'éblouir un véhicule croisé. On note que, avantageusement, le dispositif d'éclairage comprend également des moyens d'asservissement de l'éclairage des LED, en particulier pour la deuxième rangée de deuxièmes sources lumineuses 22, à un capteur d'un paramètre de trajectoire d'un véhicule automobile. Le capteur fournit avantageusement un angle de rotation d'un volant du véhicule automobile, le paramètre de trajectoire indiquant une déviation d'une route sur laquelle circule le véhicule relativement à une ligne droite, telle que, en particulier, un virage. Ainsi, la présente invention présente l'avantage de pouvoir générer un faisceau lumineux pour feu de croisement dont la coupure suit la trajectoire du véhicule sur une route sinueuse, du fait d'une discrétisation du faisceau en portions correspondant aux deuxièmes faisceaux unitaires 32.

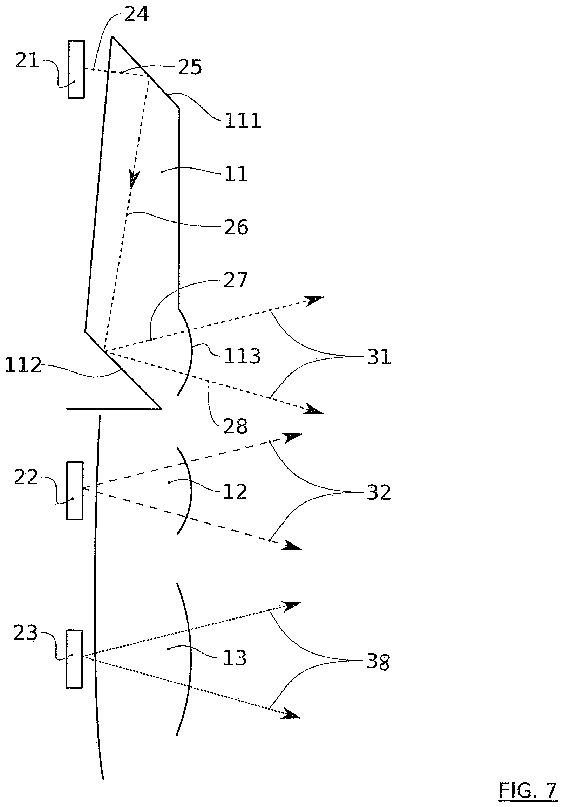

La figure 7 présente en détail le chemin des rayons lumineux issus des sources lumineuses. En ce qui concerne les premières unités d'illumination, chaque première source 21 présente une face d'émission par laquelle des faisceaux émis 24 entrent dans le premier élément optique 11, par une face d'entrée de ce dernier. Cette face d'entrée est représentée plane sur la figure 7 par simplification mais elle est avantageusement légèrement convexe de sorte à produire un bombé en direction de la source, ce bombé étant de préférence centré sur l'axe médian d'émission de la source. Les rayons parviennent jusqu'àla première surface de réflexion 111 qui, selon l'invention est positionnée en regard de la face de la source 21. Selon l'invention, la première surface de réflexion 111 est configurée pour collimater les rayons 25 et pour les diriger, sous forme de rayons réfléchis 26, vers une deuxième surface de réflexion 112. Selon l'invention, les réflexions qui s'opèrent dans le premier élément optique 11 sont des réflexions totales internes ; les angles et les indices de matériaux sont donc configurés pour produire ces réflexions. Après impact sur la deuxième surface de réflexion 112, les rayons réfléchis 27 se propagent en direction d'un dioptre de sortie 113 pour produire le premier faisceau unitaire 31. Avantageusement, le dioptre 113 est bombé de manière convexe, et possiblement de forme en portion de sphère, de sorte à étaler le faisceau 31, notamment suivant la direction latérale pour produire une bonne homogénéité d'illumination de la pluralité de faisceaux 31 émis concomitamment. Selon l'invention, l'élément optique 11 est configuré pour produire une décroissance d'illumination dans le faisceau 31, vers le bas ; l'illumination est maximale au niveau de la ligne d'horizon 36.

La figure 7 présente par ailleurs schématiquement la génération d'un deuxième faisceau unitaire 32. Émise par une deuxième source lumineuse 22 dont une face de sortie est placée en vis-à-vis d'un premier élément optique 12, la lumière traverse l'élément optique 12 jusqu'à atteindre un dioptre de sortie de ce dernier, pour générer le faisceau 32. Comme dans le cas de l'élément optique 11, le dioptre de sortie de l'élément 12 peut être bombé de manière convexe, et possiblement de forme en portion de sphère, de sorte à produire un étalement souhaité pour le deuxième faisceau 32.

Un troisième faisceau unitaire 38 est représenté en figure 7 sur la base d'une troisième source lumineuse 23 dont une face d'émission est placée en vis-à-vis d'une face d'entrée d'un troisième élément optique 13 ; la lumière traverse l'élément optique 13 jusqu'à un dioptre de sortie qui peut être bombé de manière convexe, et possiblement de forme en portion de sphère, de sorte à produire un étalement souhaité pour le troisième faisceau unitaire 38. Dans un mode de réalisation, les troisièmes faisceaux unitaires 38 assurent une fonction de complément route, le troisième faisceau de sortie en résultant étant majoritairement dirigé au-dessus de la ligne d'horizon 36.

### REFERENCES

- 1.: module lumineux
- 2.: élément optique de projection
- 3.: paroi de séparation
- 4.: élément optique de champ
- 10.: support
- 11.: premier élément optique
111. première surface de réflexion
112. deuxième surface de réflexion
113. dioptre de sortie
- 12.: deuxième élément optique
- 13.: troisième élément optique
- 14.: bloc optique
- 21.: première source
- 22.: deuxième source
- 23.: troisième source
- 24.: rayon émis
- 25.: rayon entrant
- 26.: rayon réfléchi
- 27.: rayon réfléchi
- 28.: rayon sortant
- 31.: premier faisceau unitaire
- 32.: deuxième faisceau unitaire
- 33.: premier faisceau de sortie
- 34.: deuxième faisceau de sortie
- 35.: axe médian
- 36.: ligne d'horizon
- 37.: bord de coupure

## Revendications

1. Module lumineux (1) pour véhicule automobile, comprenant au moins une première rangée de premières unités d'illumination configurée pour produire un premier faisceau de sortie (33), chaque première unité d'illumination comprenant une première source lumineuse (21) et un premier élément optique (11) configuré pour produire un premier faisceau unitaire (31) à partir de rayons lumineux issus de la première source lumineuse (21),
le premier élément optique (11) de chacune des premières unités d'illumination comprenant un guide d'ondes comprenant une première surface (111) de réflexion positionnée en regard de la face d'émission de la source lumineuse (21), recevant les rayons issus de la première source lumineuse (21) depuis un dioptre d'entrée du guide d'ondes, produisant une première réflexion totale interne des rayons issus de la première source lumineuse (21) et configurée pour collimater les rayons issus de la première source lumineuse (21), de sorte à former et diriger un faisceau réfléchi de rayons collimatés en direction d'une deuxième surface (112) de réflexion recevant les rayons collimatés et produisant une deuxième réflexion totale interne des rayons collimatés pour générer le premier faisceau unitaire (31) ;
le module (1) comprenant une unité de commande agencée pour activer et/ou désactiver et/ou modifier l'intensité lumineuse de chacune des premières sources lumineuses (21);
le premier faisceau de sortie (33) étant un faisceau de champ proche d'un feu de croisement, et le module comprenant une deuxième rangée de deuxièmes unités d'illumination configurée pour produire un deuxième faisceau de sortie (34), chaque deuxième unité d'illumination comprenant une deuxième source lumineuse (22) et un deuxième élément optique (12) configuré pour produire un deuxième faisceau unitaire (32) à partir de rayons lumineux issus de la deuxième source lumineuse (22), le deuxième faisceau de sortie (34) étant un faisceau de coupure du feu de croisement,
le module étant **caractérisé en ce que** la deuxième réflexion interne est configurée pour étaler le premier faisceau unitaire (31) suivant une direction latérale, perpendiculaire à une direction en hauteur du module et **en ce que** les réflexions internes sont configurées pour générer une décroissance de luminosité vers le bas du premier faisceau unitaire (31).

2. Module (1) selon la revendication précédente, dans lequel dans lequel la première surface (111) et la deuxième surface (112) sont décalées suivant une direction en hauteur du module.

3. Module (1) selon la revendication précédente, dans lequel la première surface (111) est située au-dessus de la deuxième surface (112) suivant la direction en hauteur du module.

4. Module (1) selon l'une des revendications précédentes, dans lequel la deuxième surface (112) de réflexion est une surface continue.

5. Module selon l'une des revendications précédentes, dans lequel les premiers éléments optiques forment un ensemble issu d'une pièce monobloc venue d'une seule matière.

6. Module (1) selon la revendication précédente en combinaison avec la revendication 4, dans lequel la surface continue est commune aux guides de chacune des premières unités d'illumination.

7. Module (1) selon l'une des revendications précédentes, dans lequel la largeur des premiers faisceaux unitaires (31) est égale au double de la largeur des deuxièmes faisceaux unitaires (32).

8. Dispositif d'éclairage et/ou de signalisation de véhicule automobile équipé d'au moins un module (1) selon l'une quelconque des revendications précédentes.

9. Dispositif selon la revendication précédente, comprenant au moins deux modules (1, 1), les modules étant configurés pour former des premiers faisceaux de sortie se chevauchant.

10. Dispositif selon la revendication précédente, dans lequel les premiers faisceaux d'un premier des au moins deux modules (1, 1) sont décalés latéralement des premiers faisceaux de sortie d'un deuxième des au moins deux modules.

## Patentansprüche

1. Leuchtmodul (1) für ein Kraftfahrzeug, umfassend mindestens eine erste Reihe aus ersten Beleuchtungseinheiten, die dazu ausgestaltet ist, ein erstes Austrittsbündel (33) zu erzeugen, wobei jede erste Beleuchtungseinheit eine erste Lichtquelle (21) umfasst und ein erstes optisches Element (11), das dazu ausgestaltet ist, ein erstes einheitliches Bündel (31) aus Lichtstrahlen zu erzeugen, die aus der ersten Lichtquelle (21) hervorgehen,
wobei das erste optische Element (11) jeder der ersten Beleuchtungseinheiten einen Wellenleiter umfasst, der eine erste gegenüber der Emissionsseite der Lichtquelle (21) angeordnete Reflexionsfläche (111) umfasst, die die aus der ersten Lichtquelle (21) hervorgehenden Strahlen von einem Eingangsdiopter des Wellenleiters aus aufnimmt, eine erste interne Totalreflexion der aus der ersten Lichtquelle (21) hervorgehenden Strahlen erzeugt und dazu ausgestaltet ist, die aus der ersten Lichtquelle (21) hervorgehenden Strahlen zu kollimieren, so dass ein reflektiertes Bündel aus kollimierten Strahlen gebildet wird und in Richtung einer zweiten Reflexionsfläche (112) gerichtet wird, die die kollimierten Strahlen aufnimmt und eine zweite interne Totalreflexion der kollimierten Strahlen erzeugt, um das erste einheitliche Bündel (31) zu generieren;
wobei das Modul (1) eine Steuereinheit umfasst, die dazu ausgebildet ist, die Lichtintensität jeder der ersten Lichtquellen (21) zu aktivieren und/oder zu deaktivieren und/oder zu ändern;
wobei das erste Austrittsbündel (33) ein Nahfeldbündel eines Abblendlichts ist und wobei das Modul eine zweite Reihe aus zweiten Beleuchtungseinheiten umfasst, die dazu ausgestaltet ist, ein zweites Austrittsbündel (34) zu erzeugen, wobei jede zweite Beleuchtungseinheit eine zweite Lichtquelle (22) umfasst und ein zweites optisches Element (12), das dazu ausgestaltet ist, ein zweites einheitliches Bündel (32) aus Lichtstrahlen, die aus der zweiten Lichtquelle (22) hervorgehen, zu erzeugen, wobei das zweite Austrittsbündel (34) ein Bündel mit Hell-Dunkel-Grenze des Abblendlichts ist,
wobei das Modul **dadurch gekennzeichnet ist, dass** die zweite interne Reflexion dazu ausgestaltet ist, das erste einheitliche Bündel (31) entlang einer seitlichen Richtung, die senkrecht zu einer Richtung in der Höhe des Moduls verläuft, auszubreiten, und dadurch, dass die internen Reflexionen dazu ausgestaltet sind, eine Abnahme der Helligkeit des ersten einheitlichen Bündels (31) nach unten hin zu generieren.

2. Modul (1) nach dem vorhergehenden Anspruch, bei dem die erste Fläche (111) und die zweite Fläche (112) entlang einer Richtung in der Höhe des Moduls versetzt sind.

3. Modul (1) nach dem vorhergehenden Anspruch, bei dem die erste Fläche (111) entlang einer Richtung in der Höhe des Moduls über der zweiten Fläche (112) liegt.

4. Modul (1) nach einem der vorhergehenden Ansprüche, bei dem die zweite Reflexionsfläche (112) eine durchgehende Fläche ist.

5. Modul nach einem der vorhergehenden Ansprüche, bei dem die ersten optischen Elemente eine Anordnung bilden, die aus einem einstückigen Teil aus einem einzigen Material hervorgegangen ist.

6. Modul (1) nach dem vorhergehenden Anspruch in Kombination mit Anspruch 4, bei dem die durchgehende Fläche den Leitern jeder der ersten Beleuchtungseinheiten gemeinsam ist.

7. Modul (1) nach einem der vorhergehenden Ansprüche, bei dem die Breite der ersten einheitlichen Bündel (31) gleich dem Zweifachen der Breite der zweiten einheitlichen Bündel (32) ist.

8. Beleuchtungs- und/oder Signalisierungsvorrichtung für ein Kraftfahrzeug, die mit mindestens einem Modul (1) nach einem der vorhergehenden Ansprüche ausgestattet ist.

9. Vorrichtung nach dem vorhergehenden Anspruch, die mindestens zwei Module (1, 1) umfasst, wobei die Module dazu ausgestaltet sind, sich überlappende erste Austrittsbündel zu bilden.

10. Vorrichtung nach dem vorhergehenden Anspruch, bei der die ersten Bündel eines ersten der mindestens zwei Module (1, 1) zu den ersten Austrittsbündeln eines zweiten der mindestens zwei Module seitlich versetzt sind.

## Claims

1. Lighting module (1) for motor vehicles, comprising at least one first row of first illumination units configured to produce a first exit beam (33), each first illumination unit comprising a first light source (21) and a first optical element (11) configured to produce a first unitary beam (31) from light rays coming from the first light source (21), the first optical element (11) of each of the first illumination units comprising a waveguide comprising a first reflection surface (111) positioned facing the emission face of the light source (21), receiving the rays coming from the first light source (21) from an entry diopter of the waveguide, producing a first total internal of the rays coming from the first light source (21) and configured to collimate the rays coming from the first light source (21), so as to form and direct a reflected beam of collimated rays in the direction of the second reflection surface (112) receiving the collimated rays and producing a second total internal reflection of the collimated rays to generate the first unitary beam (31) ;
the module (1) comprising a control unit adapted to activate and/or to deactivate and/or to modify the luminous intensity of each of the first light sources (21) ;
the first exit beam (33) being a near field beam of a low beam light, and
the module comprising a second row of second illumination units configured to produce a second exit beam (34), each second illumination unit comprising a second light source (22) and a second optical element (12) configured to produce a second unitary beam (32) from light rays coming from the second light source (22), the second exit beam (34) being a cut-off beam of the low beam light,
the module being **characterized in that** the second internal reflection is configured to spread the first unitary beam (31) in a lateral direction perpendicular to a heightwise direction of the module and **in that** the internal reflections are configured to generate a decrease of brightness toward the bottom of the first unitary beam (31).

2. Module (1) according to the preceding claim, in which the first surface (111) and the second surface (112) are offset in a heightwise direction of the module.

3. Module (1) according to the preceding claim, in which the first surface (111) is situated above the second surface (112) in the heightwise direction of the module.

4. Module (1) according to any one of the preceding claims, in which the second reflection surface (112) is a continuous surface.

5. Module according to any one of the preceding claims, in which the first optical elements form an assembly of a monobloc component made from a single material.

6. Module (1) according to the preceding claim in combination with Claim 4, in which the continuous surface is common to the guides of each of the first illumination units.

7. Module (1) according to any one of the preceding claims, in which the width of the first unitary beams (31) is equal to twice the width of the second unitary beams (32).

8. Motor vehicle lighting and/or signalling device equipped with at least one module (1) according to any one of the preceding claims.

9. Device according to the preceding claim, comprising at least two modules (1, 1), the modules being configured to form overlapping first exit beams.

10. Device according to the preceding claim, in which the first beams from a first of the at least two modules (1, 1) are offset laterally from the first exit beams of a second of the at least two modules.
